# EUROPÄISCHE PATENTSCHRIFT

(11) **EP 3 684 535 B1**
(45) Veröffentlichungstag und Bekanntmachung des Hinweises auf die Patenterteilung: **14.09.2022**
(21) Anmeldenummer: 18746905.1
(22) Anmeldetag: 26.07.2018
(51) Int. Cl.: B23B 29/02

(54) **ZERSPANUNGSWERKZEUG, BEARBEITUNGSVORRICHTUNG SOWIE VERFAHREN ZUR BEARBEITUNG VON WERKSTÜCKEN**
MACHINING TOOL, PROCESSING DEVICE, AND METHOD FOR PROCESSING WORKPIECES
OUTIL À ENLÈVEMENT DE COPEAUX, DISPOSITIF D'USINAGE AINSI QUE PROCÉDÉ DESTINÉ À USINER DES PIÈCES

(30) Priorität: 22.09.2017 DE 102017216860
(43) Veröffentlichungstag der Anmeldung: 29.07.2020
(73) Patentinhaber: Kennametal Inc., Latrobe, PA 15650-0231 (US)
(72) Erfinder: HACKER, Michael, 90482 Nürnberg (DE); KUNSCHIR, Sebastian, 92559 Winklarn (DE)
(74) Vertreter: Prinz & Partner mbB
(86) Internationale Anmeldenummer: PCT/EP2018/070250
(87) Internationale Veröffentlichungsnummer: WO 2019/057369

(56) Entgegenhaltungen:
- WO-A1-2014/195007
- US-A- 3 795 160
- US-A- 3 935 764
- US-A- 3 981 210

## Beschreibung

Die Erfindung betrifft ein Zerspanungswerkzeug, insbesondere eine Reihenbohrstange, mit den Merkmalen des Oberbegriffs des Patentanspruchs 1, eine Bearbeitungsvorrichtung mit einem entsprechenden Zerspanungswerkzeug sowie ein Verfahren zur Bearbeitung von Werkstücken mit Hilfe eines solchen Zerspanu ngswerkzeugs.

Ein derartiges Zerspanungswerkzeug ist hierbei beispielsweise in der US 3 981 210 A beschrieben.

Lagerwellen, beispielsweise Nocken- oder Kurbelwellen in Kraftfahrzeugen, sind üblicherweise an mehreren, axial voneinander beabstandeten Lagerstegen in Lagerohrungen, nachfolgend kurz als Bohrungen bezeichnet, gelagert. Die einzelnen Bohrungen werden dabei üblicherweise mit Hilfe einer sogenannten Reihenbohrstange auf ein Endmaß aufgebohrt. Diese weist in Axialrichtung um das jeweilige Abstandsmaß versetzt zueinander angeordnete Schneiden auf, die jeweils für die Bearbeitung einer jeweiligen Bohrung vorgesehen sind, so dass mittels einer solchen Reihenbohrstange mehrere der Bohrungen durch die in Axialrichtung voneinander beabstandeten Schneiden gleichzeitig bearbeitet werden können. Dem Abstandsmaß der Bohrungen entsprechend sind daher an der Bohrstange Arbeitspositionen mit jeweils einer Schneide ausgebildet. Üblicherweise ist dabei jeweils pro Arbeitsposition nur eine Schneide ausgebildet. Für den Bohrvorgang muss die Bohrstange typischerweise geführt oder abgestützt werden. Eine unmittelbare Abstützung der Bohrstange im Bereich der jeweiligen Schneiden durch Führungselemente, wie dies beispielsweise bei Reibahlen bekannt ist, ist dabei in einigen Fällen nicht ohne Weiteres möglich.

Die US 3 981 210 A offenbart ein Zerspanungswerkzeug zur Bearbeitung einer Bohrung eines Werkstückes, aufweisend einen sich in Richtung einer Werkzeuglängsachse erstreckenden Schneidenkörper mit einem umfangsseitig angeordneten Schneidelement. Das Zerspanungswerkzeug hat ferner eine Führungsrolle, die über einer Achse im Schneidenkörper drehbar gelagert ist. Die Achse ist mittels Stellschrauben relativ zur Werkzeuglängsachse radial verschiebbar und ist bei einer Nutzung versetzt zur Werkzeuglängsachse angeordnet.

Ferner sind Zerspanungswerkzeuge zur Bearbeitung einer Bohrung eines Werkstückes aus der US 3 795 160 A sowie der US 3 935 764 A bekannt.

Ausgehend hiervon liegt der Erfindung die Aufgabe zugrunde, ein vorteilhaft ausgestaltetes Zerspanungswerkzeug, eine vorteilhaft ausgestaltete Bearbeitungsvorrichtung und ein vorteilhaftes Verfahren zur Bearbeitung von Werkstücken anzugeben.

Diese Aufgabe wird erfindungsgemäß gelöst durch ein Zerspanungswerkzeug mit den Merkmalen des Anspruchs 1, durch eine Bearbeitungsvorrichtung mit den Merkmalen des Anspruchs 10 sowie durch ein Verfahren mit den Merkmalen des Anspruchs 11. Bevorzugte Weiterbildungen sind jeweils in den Unteransprüchen niedergelegt. Die im Hinblick auf das Zerspanungswerkzeug angeführten Vorteile und bevorzugten Ausgestaltungen sind sinngemäß auch auf die Bearbeitungsvorrichtung und/oder das Verfahren zu übertragen und umgekehrt.

Ein entsprechendes Zerspanungswerkzeug ist dabei typischerweise als Bohrer, Bohrstange oder Reihenbohrstange ausgestaltet und zur Bearbeitung einer Bohrung eines Werkstückes und insbesondere zur gleichzeitigen Bearbeitung von mehreren um ein vorgegebenes Abstandsmaß voneinander beabstandeten Bohrungen eines Werkstückes ausgebildet. Hierzu weist das Zerspanungswerkzeug einen sich in Richtung einer Werkzeuglängsachse erstreckenden Schneidenkörper auf, an welchem umfangsseitig zumindest ein Schneidelement angeordnet ist und insbesondere mehrere um das vorgegebene Abstandsmaß voneinander beabstandete Schneidelemente angeordnet sind. Weiter weist das Zerspanungswerkzeug einen sich in Richtung der Werkzeuglängsachse gesehen an den Schneidenkörper anschließenden und am Schneidenkörper befestigten Führungskörper auf, an welchem zwei Führungselemente umfangsseitig angeordnet sind. Hierbei ist der Führungskörper frei von Schneidelementen und zudem ist der Führungskörper zur Ausübung einer Vorspannkraft derart ausgebildet, dass bei einer Nutzung, also insbesondere während der Bearbeitung eines Werkstückes, zumindest die beiden Führungselemente gegen eine Wandung eines Lagers oder gegen eine Wandung einer Lagerbohrung für den Führungskörper vorgespannt sind.

Die beiden Führungselemente sind dabei umfangsseitig an zwei Winkelpositionen am Führungskörper und bevorzugt in Richtung der Werkzeuglängsachse gesehen auf gleicher Längsposition am Führungskörper angeordnet. Den beiden Winkelpositionen ist dann eine Winkelhalbierende zugeordnet und das Zerspanungswerkzeug ist weiter derart ausgebildet, dass die Vorspannkraft in Richtung der Winkelhalbierenden verläuft. Das Zerspanungswerkzeug ist dabei in einigen Fällen für ein vorgegebenes Lager, also insbesondere eine vorgegebene Lagerbohrung mit vorgegebenen Durchmesser, ausgebildet sowie ausgelegt und dementsprechend ist dann die vorgesehene Vorspannkraft typischerweise nur dann gegeben, wenn das Zerspanungswerkzeug in einem derartigen Lager, also in einer derartigen Lagerbohrung, geführt ist. In diesen Fällen werden für verschiedene Lager oder Lagerbohrungen mit unterschiedlichen Durchmessern typischerweise entsprechend angepasste Zerspanungswerkzeuge bereitgestellt. Ergänzend hierzu ist ein entsprechendes Zerspanungswerkzeug durch seinen Verstellmechanismus an verschiedene Lager oder Lagerbohrungen mit unterschiedlichen Durchmessern anpassbar ausgebildet.

Im vorgespannten Zustand des Zerspanungswerkzeugs liegen dann die beiden Führungselemente des Führungskörpers mit einem vorgesehenen und entsprechend vorgegebenen Anpressdruck an einer Wandung eines Lagers oder einer Lagerbohrung eines Werkstückes, für die das Zerspanungswerkzeug ausgebildet und ausgelegt ist, an, wodurch letztenendes die Vorspannung des Zerspanungswerkzeugs erreicht wird. Während der Bearbeitung des Werkstücks ist das Zerspanungswerkzeug gegen das Lager oder die Lagerbohrung vorgespannt, was sich günstig auf die Präzision des Zerspanungswerkzeugs auswirkt. Denn mit einer entsprechenden Vorspannung wird üblicherweise eine sehr sichere Lagerung des Zerspanungswerkzeugs beispielsweise in einer aufnehmenden Bohrung, einer Lagerbohrung, erzielt und ein Abheben von der Bohrungswand wird verhindert. Dies führt zu einer relativ robusten und genauen Arbeitsweise des Zerspanungswerkzeugs.

Der Schneidenkörper des Zerspanungswerkzeugs, auch Schneidenteil genannt, ist weiter je nach Anwendungszweck beispielsweise zylinderförmig ausgestaltet oder weist im Querschnitt gesehen einen Exzenterbereich auf, so wie dies beispielsweise beim Grundkörper der WO 2014/195007 A1 der Fall ist. In diesem Fall weist der Schneidenkörper dann zum Beispiel analog zu dem in der WO 2014/195007 A1 beschriebenen Grundkörper einen Basiskörper sowie ein Wuchtelement auf. Es wird daher hiermit ausdrücklich auf die WO 2014/195007 A1 Bezug genommen, insbesondere im Hinblick auf mögliche Ausgestaltungsvarianten des Schneidenkörpers des hier beschriebenen Zerspanungswerkzeugs. Weiter fällt die Werkzeuglängsachse typischerweise im Wesentlichen mit einer Mittellängsachse des Schneidenkörpers und/oder mit einer Schwerpunktsachse des Schneidenkörpers zusammen.

Der Führungskörper wiederum ist beispielsweise zylinderförmig ausgestaltet und weist umfangsseitig die beiden Führungselemente zum Führen des Führungskörpers und somit des Zerspanungswerkzeugs an einem zu bearbeitenden Werkstück und insbesondere zum Führen in einer Führungsbohrung auf. Ein entsprechendes Führungselement ist dabei beispielsweise als Führungsleiste ausgebildet, die sich vorzugsweise in Richtung der Werkzeuglängsachse oder in Richtung einer Körperlängsachse des Führungskörpers erstreckt.

Weiter weist der Führungskörper, auch Führungsteil genannt, die zuvor genannte Körperlängsachse auf, die bei einer Nutzung des Zerspanungswerkzeugs versetzt oder parallel verschoben zur Werkzeuglängsachse angeordnet ist. Hierbei fällt die Werkzeuglängsachse typischerweise im Wesentlichen mit der Rotationsachse des Zerspanungswerkszeugs während der Nutzung und somit während der Bearbeitung eines Werkstückes zusammen, sodass dann während der Nutzung die Körperlängsachse des Führungskörpers exzentrisch zur Werkzeuglängsachse und somit zur Rotationsachse angeordnet ist.

Die Körperlängsachse des Führungskörpers entspricht dabei bevorzugt der Mittellängsachse des Führungskörpers, sofern dieser eine einfache Zylinderform aufweist. Davon unabhängig verläuft die Körperlängsachse des Führungskörpers typischerweise durch den Masseschwerpunkt des Führungskörpers und bevorzugt durch zumindest zwei Flächenschwerpunkte von zwei voneinander beabstandeten Querschnitten des Führungskörpers.

In allen Ausgestaltungen des Zerspanungswerkzeugs ist die Körperlängsachse und damit der Führungskörper mittels des Verstellmechanismus relativ zur Werkzeuglängsachse in einer radialen Richtung verschiebbar und zwar insbesondere in Vorspannrichtung. Als Vorspannrichtung wird dabei die Richtung bezeichnet, in der die Vorspannkraft wirkt, in der also der Führungskörper gegen ein Lager oder eine Lagerbohrung vorgespannt ist oder vorgespannt wird.

In vorteilhafter Weiterbildung ist die Körperlängsachse des Führungskörpers dabei zumindest zunächst parallel zur Werkzeuglängsachse ausgerichtet und der Verstellmechanismus ist zur Realisierung eines ersten Freiheitsgrades, in einigen Fällen des einzigen Freiheitsgrades, derart ausgebildet, dass die Körperlängsachse und somit der Führungskörper in radialer Richtung und insbesondere in Vorspannrichtung relativ zur Werkzeuglängsachse verschiebbar ist, insbesondere zur Realisierung einer Anpassbarkeit des Zerspanungswerkzeugs an unterschiedliche Führungsbohrungen. Dabei fällt die Körperlängsachse weiter bevorzugt in einer Ausgangsstellung des Führungskörpers mit der Werkzeuglängsachse zusammen und wird für eine Nutzung des Zerspanungswerkzeugs radial nach außen verschoben, sodass die Werkzeuglängsachse und die Körperlängsachse nachfolgend parallel versetzt zueinander angeordnet sind. Im einfachsten Fall ist der Verstellmechanismus dabei derart ausgebildet, dass für die Verstellbarkeit lediglich ein Freiheitsgrad gegeben ist, der dann, beispielsweise über eine Stellschraube, ein paralleles Verschieben von Körperlängsachse zu Werkzeuglängsachse ermöglicht.

Ergänzend hierzu kann eine Verstellbarkeit für die beiden Führungselemente realisiert sein. Sind die Führungselemente dabei jeweils als Führungsleiste ausgestaltet, so wird beispielsweise die Führungsleiste in radialer Richtung verschoben. Eine derartige Verschiebbarkeit lässt sich dabei für ein entsprechendes Führungselement zum Beispiel wiederum mit Hilfe einer oder mehrerer Stellschrauben realisieren.

Zudem bevorzugt ist der Winkel zwischen der Vorspannrichtung, also der Richtung der Vorspannkraft, und der Winkelhalbierenden oder vielmehr der Richtung der Winkelhalbierenden kleiner als 20% vom Winkel zwischen den zwei Winkelpositionen, weiter bevorzugt kleiner als 10% und insbesondere kleiner als 5% vom Winkel zwischen den beiden Winkelpositionen. Ist dann ein Verstellmechanismus vorgesehen, mittels dessen der Führungskörper in radialer Richtung relativ zur Werkzeuglängsachse verschiebbar ist, so erfolgt die Verschiebung bevorzugt in Vorspannrichtung und weiter bevorzugt in Richtung der Winkelhalbierenden.

Ein solcher Verstellmechanismus, der eine Verschiebung in radialer Richtung und insbesondere in Vorspannrichtung ermöglicht, weist zweckdienlicherweise eine sich in radialer Richtung und insbesondere in Vorspannrichtung erstreckende Führungsschiene, Führungsleiste und/oder oder Führungsnut auf, entlang derer der Führungskörper relativ zum Schneidenkörper verschiebbar ist. Der Querschnitt einer entsprechenden Führungsschiene, Führungsleiste bzw. Führungsnut weist dabei beispielsweise die Form eines Schwalbenschwanzes auf.

Einer weiteren Ausgestaltungsvariante entsprechend ist der Verstellmechanismus zur Realisierung eines Freiheitsgrades und insbesondere eines zweiten Freiheitsgrades derart ausgebildet, dass der Führungskörper um die Körperlängsachse verdrehbar ist. Die entsprechende Verdrehbarkeit ist dabei je nach Ausführungsvariante entweder allein oder zusammen mit der zuvor beschriebenen Verschiebbarkeit realisiert, um so eine 1D-Verstellbarkeit mit einem Freiheitsgrad oder eine 2D-Verstellbarkeit mit zwei Freiheitsgraden zu realisieren.

Weiter ist eine Ausführung des Verstellmechanismus zweckdienlich, bei der Verstellmechanismus zur Realisierung eines Freiheitsgrades, insbesondere zur Realsierung eines zweiten oder dritten Freiheitsgrades, derart ausgebildet ist, dass die Körperlängsachse relativ zur Werkzeuglängsachse verkippbar oder abknickbar ist. Durch eine derartige Verstellbarkeit, die je nach Ausführungsvariante allein, zusammen mit einer der zuvor genannten oder zusammen mit beiden zuvor genannten Verstellvarianten realisiert wird, ermöglicht eine Verstellbarkeit, wie sie beispielsweise in ähnlicher Weise mittels eines sogenannten SIF-Adapters realisierbar ist. Dabei bedingt eine Verkippung der Körperlängsachse relativ zur Werkzeuglängsachse ein gewünschtes Taumeln des Zerspanungswerkszeugs.

Gemäß einer weiteren vorteilhaften Ausgestaltung des Zerspanungswerkzeugs ist die Masse des Führungskörpers bei einer Nutzung des Zerspanungswerkzeugs ungleichmäßig um die Werkzeuglängsachse herum verteilt, um auf diese Weise konstruktiv eine gerichtete Unwucht bei einer Rotation um die Werkzeuglängsachse vorzugeben. Dabei ist beim Zerspanungswerkzeug weiter bevorzugt lediglich im Bereich des Führungskörpers eine derartige Unwucht vorgegeben, wohingegen der Schneidenkörper bevorzugt ausgewuchtet ist bezüglich einer Rotation um die Werkzeuglängsachse. In Folge dessen liegt dann der lokale Massenschwerpunkt des Zerspanungswerkzeugs im Bereich des Führungskörpers und somit im Bereich des Freiendes des Zerspanungswerkzeugs versetzt zur Rotationsachse des Zerspanungswerkzeugs. Auf den entsprechenden lokalen Massenschwerpunkt wirkt somit bei einem Einsatz des Zerspanungswerkzeugs, also bei einer Rotation, eine Fliehkraft und in der Folge verbiegt sich das Zerspanungswerkzug, wobei das Freiende, also der Führungskörper, ausgehend von der Rotationsachse, also der Werkzeuglängsachse, radial nach außen gebogen und damit gegebenenfalls gegen eine Bohrungswand, also das Lager oder die Lagerbohrung, gepresst wird.

Zweckdienlich ist es zudem, wenn der Schneidenkörper einen Schneidelementträger aufweist, an dem das zumindest eine Schneidelement oder mehrere Schneidelemente umfangsseitig angeordnet ist bzw. sind. Hierbei ist das Schneidelement oder sind die Schneidelemente bevorzugt reversibel lösbar am Schneidelementträger befestigt und in diesem Fall sind die Schneidelemente dann weiter bevorzugt als Schneideinsätze ausgebildet. Ein entsprechender Schneidelementträger ist dann zum Beispiel aus einem einfacheren Werkzeugstahl gefertigt, wohingegen das Schneidelement oder die Schneidelemente typischerweise aus einem höherwertigen Hartmetall, Cermet, PKD oder PCBN besteht bzw. bestehen.

Sind mehrere Schneidelemente vorgesehen, so sind diese vorzugsweise in Richtung der Werkzeuglängsachse gesehen im Wesentlichen in einer Linie umfangsseitig am Schneidenkörper angeordnet, insbesondere in einer Linie parallel zur Werkzeuglängsachse. Das heißt, dass die Schneidelemente in diesem Fall in Richtung der Werkzeuglängsachse verteilt umfangsseitig am Schneidenkörper angeordnet sind, jedoch stets an der gleichen Winkelposition positioniert sind.

Außerdem weist der Schneidenkörper keine Führungselemente auf sodass der Schneidenkörper lediglich Schneidelemente aufweist und der Führungskörper lediglich Führungselemente.

Zweckdienlich ist es weiter, wenn der Führungskörper einen Führungselementeträger, beispielsweise aus einem einfacheren Werkzeugstahl, aufweist, an dem die Führungselemente umfangsseitig angeordnet und reversibel lösbar insbesondere aber unlösbar befestigt ist bzw. sind. Die Führungselemente sind dann typischerweise aus einem höherwertigen Hartmetall, Cermet oder PKD gefertigt Günstig ist es weiter, wenn der Führungskörper reversibel lösbar am Schneidenkörper befestigt ist, beispielsweise mit Hilfe einer Schraubverbindung.

Weiter weist der Führungskörper typischerweise in Richtung der Körperlängsachse eine Ausdehnung auf, deren Wert im Bereich zwischen etwa 5 cm und etwa 9 cm liegt, also beispielsweise 7 cm beträgt. Unabhängig vom tatsächlichen Wert entspricht die Ausdehnung des Führungskörpers in Richtung der Körperlängsachse bevorzugt zwischen 10% und 30% der Ausdehnung des Schneidenkörpers in Richtung der Werkzeuglängsachse.

In vielen Fällen ist das Zerspanungswerkzeug ausgebildet für eine Bearbeitung von Werkstücken, bei denen der Durchmesser der zu bearbeitenden Bohrungen oder der zu bearbeitenden Bohrung im Wesentlichen gleich dem Durchmesser der Lagerbohrung oder des Lagers ist. Insbesondere in diesem Fall ist dann das Zerspanungswerkzeug an die entsprechenden Werkstücke angepasst und derart ausgebildet, dass bei einer Nutzung das zumindest eine Schneidelement bei einer Rotation um die Werkzeuglängsachse entlang eines Schneidkreises mit einem Schneidradius geführt ist und dass die beiden Führungselemente bei einer Rotation um die Werkzeuglängsachse entlang eines Führungskreises mit einem Führungsradius geführt sind, wobei der Führungsradius größer oder gleich als der Schneidradius ist. Ist dann bei dem Zerspanungswerkzeug ein Verstellmechanismus gegeben, so ist dieser Verstellmechanismus bevorzugt derart ausgebildet, dass der Führungsradius mittels des Verstellmechanismus, beispielsweise durch eine Zwangsführung mittels Verzahnung, variabel vorgebbar oder variabel einstellbar ist, sodass durch den Verstellmechanismus eine Vorgabe ermöglicht wird, bei der der Führungsradius größer oder gleich als der Schneidradius ist.

Hierbei ist es weiter günstig, wenn die Differenz zwischen dem Schneidradius und dem Führungsradius und / oder zwischen Achsen des Schneidradius und dem Führungsradius in einem Bereich zwischen 50 und 200 µm liegt. Weiter bevorzugt ist die Differenz dabei größer als 25 µm, größer als 50 µm und insbesondere größer als 100 µm. Zweckdienlich ist es des Weiteren wenn die Differenz kleiner 300 µm, kleiner 200 µm und insbesondere kleiner 100 µm ist.

Ein zuvor beschriebenes Zerspanungswerkzeug ist bevorzugt als Einsatz für eine Werkzeugmaschine mit einer Spindel und mit einer Werkzeugaufnahme ausgebildet und dementsprechend weist das Zerspanungswerkzeug zweckdienlicherweise einen Schaft oder Werkzeugschaft auf, der sich in Richtung der Werkzeuglängsachse gesehen dem Führungskörper gegenüberliegend an den Schneidenkörper anschließt. Der Schaft ist hierbei bevorzugt einstückig oder monolithisch ausgeschaltet und insbesondere als Spannschaft oder als Schaft für eine HSK-Werkzeugaufnahme oder eine Steilkegel-Werkzeugaufnahme ausgebildet.

Zusammen mit einer entsprechenden Werkzeugmaschine bildet das Zerspanungswerkzeug dann eine Bearbeitungsvorrichtung zur Bearbeitung von Werkstücken aus. Hierbei weist die Werkzeugmaschine der Bearbeitungsvorrichtung bevorzugt eine Spindel mit einer Werkzeugaufnahme jedoch ohne Ausrichtmechanismus auf und ein zuvor beschriebenes Zerspanungswerkzeug wird weiter bevorzugt unmittelbar mit der Spindel der Werkzeugmaschine verbunden. Das heißt, dass insbesondere auf eine Zwischenschaltung eines sogenannten Ausricht-Adapters oder eines SIF-Adapters (SIF=Steerable InterFace) verzichtet wird.

Ausführungsbeispiele der Erfindung werden nachfolgend anhand der Figuren näher erläutert.

Diese zeigen jeweils in vereinfachten, schematisierten Darstellungen:
- FIG 1: in einer ersten perspektivischen Ansicht ein Zerspanungswerkzeug mit einem Schneidenkörper und mit einem Führungskörper,
- FIG 2: in einer zweiten perspektivischen Ansicht das Zerspanungswerkzeug mit dem Schneidenkörper und mit dem Führungskörper,
- FIG 3: in der zweiten perspektivischen Ansicht das Zerspanungswerkzeug mit dem Schneidenkörper und mit dem Führungskörper, wobei der Führungskörper relativ zum Schneidenkörper verschoben ist,
- FIG 4: in der zweiten perspektivischen Ansicht das Zerspanungswerkzeug mit dem Schneidenkörper und ohne den Führungskörper,
- FIG 5: in einer dritten perspektivischen Ansicht den Führungskörper sowie
- FIG 6: in einer vierten perspektivischen Ansicht den Führungskörper.

In den Figuren sind gleichwirkende Teile mit den gleichen Bezugszeichen versehen.

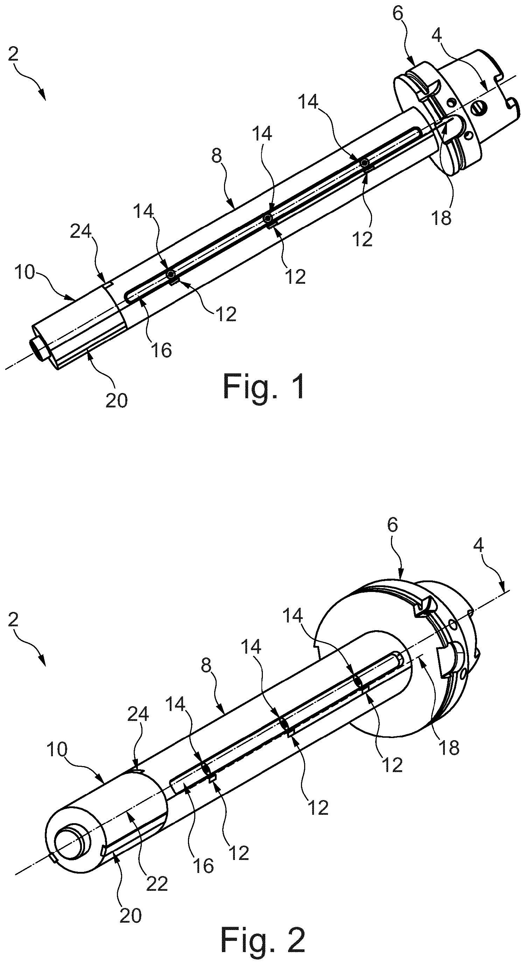

Ein nachfolgend exemplarisch beschriebenes und in Fig.1 gezeigtes Zerspanungswerkzeug 2 dient zur zeitgleichen Bearbeitung von mehreren um ein vorgegebenes Abstandsmaß voneinander beabstandeten Bohrungen und ist dementsprechend an diesen Anwendungszweck angepasst ausgebildet.

Das Zerspanungswerkzeug 2 ist dabei entlang einer Werkzeuglängsachse 4 ausgedehnt, wobei diese Werkzeuglängsachse 4 eine Art Mittellängsachse des Zerspanungswerkzeugs 2 darstellt. Weiter weist das Zerspanungswerkzeug 2 einen Schaft 6 auf, der in eine komplementäre Werkzeugaufnahme einer Spindel einer nicht mit abgebildeten Werkzeugmaschine einsetzbar ist und somit reversibel lösbar mit der Werkzeugmaschine verbunden werden kann. Für eine Bearbeitung von Werkstücken wird dann dementsprechend der Schaft 6 des Zerspanungswerkzeugs 2 in die Werkzeugaufnahme der Werkzeugmaschine eingesetzt und somit mit der Werkzeugmaschine verbunden und nachfolgend wird das Zerspanungswerkzeug 2 mithilfe der Spindel der Werkzeugmaschine in Rotation versetzt, wobei die Rotationsachse zumindest in guter Näherung mit der Werkzeuglängsachse 4 zusammenfällt.

Hierbei ist ein exaktes Zusammenfallen vorgesehen, jedoch lässt sich dieses aufgrund gegebener Fertigungstoleranzen nicht immer realisieren. Dennoch weist die Spindel bevorzugt keinen Ausrichtmechanismus auf und das Zerspanungswerkzeug wird weiter bevorzugt unmittelbar mit der Spindel verbunden ohne Zwischenschaltung eines Ausricht-Adapters. Auch der Schaft 6 weist hierbei bevorzugt keinen Ausrichtmechanismus auf und ist weiter bevorzugt einstückig oder monolithisch ausgestaltet.

An den Schaft 6 schließt sich in Richtung der Werkzeuglängsachse 4 gesehen ein Schneidenkörper 8 an, der im Ausführungsbeispiel eine Zylinderform aufweist sowie unlösbar mit dem Schaft 6 verbunden ist und dementsprechend nicht zerstörungsfrei vom Schaft 6 lösbar ist. An dem dem Schaft 6 gegenüberliegenden Ende des Schneidenkörpers 8 ist weiter ein Führungskörper 10 positioniert, der während der Nutzung des Zerspanungswerkzeug 2 quasi das Freiende des Zerspanungswerkzeugs 2 ausbildet und bevorzugt reversibel lösbar mit dem Schneidenkörper 8 verbunden ist.

Am Schneidenkörper 8 sind im Ausführungsbeispiel drei Schneidelemente 12 umfangsseitig angeordnet, wobei jedes Schneidelement 12 mittels einer Schraube 14 reversibel lösbar am Schneidenkörper 8 oder vielmehr an einem dem Schneidenkörper 8 mitausbildenden Schneidelementträger befestigt ist. Die Schneidelemente 12 können somit bei Bedarf ausgetauscht werden. Die zur Befestigung der Schneidelemente 12 genutzten Schrauben 14 sind zweckdienlichereweise in einer Vertiefung 16 angeordnet und die Schneidelemente 12 sind im Ausführungsbeispiel entlang einer Linie 18 entlang der Werkzeuglängsachse 4 verteilt angeordnet, wobei die Linie 18 parallel zur Werkzeuglängsachse 4 verläuft. Der Abstand zwischen den Schneidelementen 12 entspricht dabei dem Abstand zwischen den zu bearbeitenden Bohrungen an den Werkstücken, für die das Zerspanungswerkzeug 2 ausgelegt ist.

Der Führungskörper 10 weist im Ausführungsbeispiel ebenfalls eine Zylinderform auf. Dabei sind umfangsseitig am Führungskörper 10 zwei Führungsleisten 20 als Führungselemente positioniert, wobei die Führungsleisten 20 parallel zu einer Körperlängsachse 22 des Führungskörpers 10 angeordnet sind. Die Körperlängsachse 22 des Führungskörpers 10 entspricht dabei einer Art Mittellängsachse des Führungskörpers 10, die im Wesentlichen auch mit der Schwerpunktsachse des Führungskörpers 10 zusammenfällt und somit durch den Masseschwerpunkt des Führungskörpers 10 verläuft.

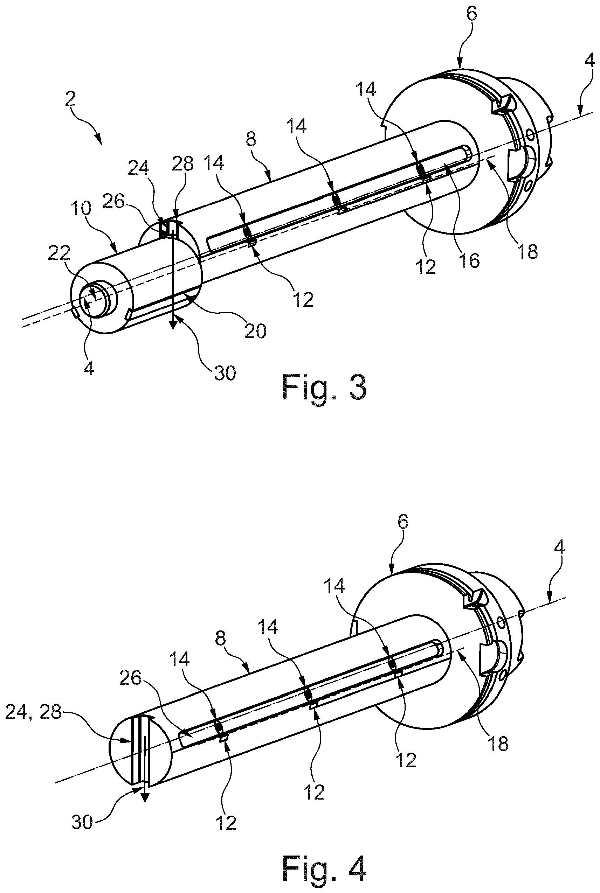

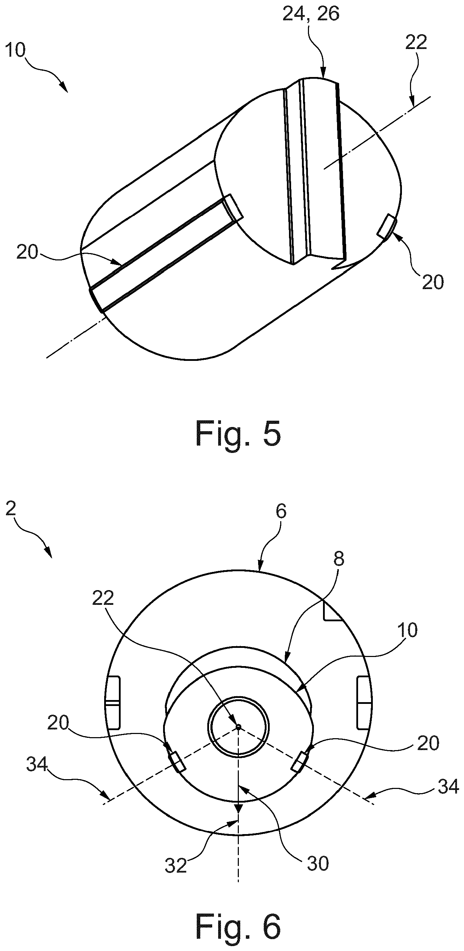

Der Führungskörper 10 ist im Ausführungsbeispiel nicht nur reversibel lösbar mit dem Schneidenkörper 8 verbunden, sondern darüber hinaus über einen Verstellmechanismus 24, der wie in Fig. 4 sowie Fig. 5 angedeutet, eine Leiste 26 und eine Nut 28 aufweist. Die Leiste 26 ist hierbei am Führungskörper 10 ausgebildet und die Nut 28 am Schneidenkörper 8. Durch diesen Verstellmechanismus 24 lässt sich die Körperlängsachse 22 und somit der Führungskörper 10 relativ zur Werkzeuglängsachse 4 und somit zum Schneidenkörper 8 in einer radialen Richtung verschieben. Hierbei wird die jeweilige Verschiebeposiiton beispielsweise mittels einer nicht dargestellten Schraube fixiert oder durch die Drehstellung einer Schraube variabel vorgegeben oder eingestellt. In einer Ausgangsstellung oder Ausgangsposition ist der Führungskörper 10 dabei typischerweise derart angeordnet, dass die Körperlängsachse 22 des Führungskörpers 10 mit der Werkzeuglängsachse 4 zusammenfällt.

Für eine Nutzung des Zerspanungswerkzeugs 2 jedoch, also für eine Bearbeitung eines Werkstückes, wird die Körperlängsachse 22 des Führungskörpers 10 aus dieser Ausgangslage heraus verschoben, sodass die Körperlängsachse 22 und die Werkzeuglängsachse 4 und somit typischerweise die Rotationsachse des Zerspanungswerkzeugs 2 parallel versetzt zueinander angeordnet sind. Durch einen entsprechenden Versatz wird dabei das Zerspanungswerkzeug 2 vorgespannt, um hierdurch eine sichere Führung des Zerspanungswerkzeugs 2 an einem dafür vorgesehenen Lager oder in einer dafür vorgesehenen Lagerbohrung zu erreichen, was der Bearbeitungspräzision zugutekommt.

Ist das entsprechende Zerspanungswerkzeug 2 dann vorgespannt, so liegen die Führungsleisten 20 des Führungskörpers 10 mit einem vorgesehenen und entsprechend vorgegebenen Anpressdruck an einer Wandung des Lagers oder der Lagerbohrung an, wodurch die Vorspannung des Zerspanungswerkzeugs 2 erreicht wird. Die Richtung dieses Anpressdrucks ist hierbei im durch eine Vorspannrichtung 30 vorgegeben, die in Richtung der Winkelhalbierenden 32 zusammenfällt, die durch die beiden Winkelpositionen 34 der beiden Führungsleisten 20 bestimmt ist.

## Patentansprüche

1. Zerspanungswerkzeug (2) zur Bearbeitung einer Bohrung eines Werkstückes, insbesondere zur zeitgleichen Bearbeitung von mehreren um ein vorgegebenes Abstandsmaß voneinander beabstandeten Bohrungen, aufweisend einen sich in Richtung einer Werkzeuglängsachse (4) erstreckenden Schneidenkörper (8) mit zumindest einem umfangsseitig angeordneten Schneidelement (12) und einen am Schneidenkörper (8) befestigten Führungskörper (10), der frei von Schneidelementen (12) ist, wobei der Führungskörper (10) eine Körperlängsachse (22) aufweist, die bei einer Nutzung versetzt zur Werkzeuglängsachse (4) angeordnet ist, wobei der Führungskörper (10) mittels eines Verstellmechanismus (26,28) relativ zur Werkzeuglängsachse (4) radial verschiebbar ist, wobei der Führungskörper (10) sich in Richtung der Werkzeuglängsachse (4) an den Schneidenkörper (8) anschließt,
**dadurch gekennzeichnet dass**,
der Führungskörper zwei Führungselemente (20) aufweist, die umfangsseitig an zwei Winkelpositionen (34) angeordnet sind, wobei der Führungskörper (10) zur Ausübung einer Vorspannkraft derart ausgebildet ist, dass bei einer Nutzung die beiden Führungselemente (20) gegen ein Lager für den Führungskörper (10) vorgespannt sind, wobei den zwei Winkelpositionen (34) eine Winkelhalbierende (32) zugeordnet ist und die Vorspannkraft (30) in Richtung der Winkelhalbierenden (32) verläuft.

2. Zerspanungswerkzeug (2) nach Anspruch 1,
**dadurch gekennzeichnet,**
**dass** die Körperlängsachse (22) parallel zur Werkzeuglängsachse (4) ausgerichtet ist und dass der Verstellmechanismus (26,28) zur Realisierung eines Freiheitsgrades derart ausgebildet ist, dass die Körperlängsachse (22) in radialer Richtung (30) relativ zur Werkzeuglängsachse (4) verschiebbar ist.

3. Zerspanungswerkzeug (2) nach Anspruch 1 oder 2,
**dadurch gekennzeichnet,**
**dass** der Verstellmechanismus (26,28) eine sich in radialer Richtung erstreckende Führungsschiene (26) oder Führungsnut (28) aufweist, entlang derer der Führungskörper (10) verschiebbar ist.

4. Zerspanungswerkzeug (2) nach einem der vorhergehenden Ansprüche ,
**dadurch gekennzeichnet,**
**dass** der Verstellmechanismus (26,28) zur Realisierung eines Freiheitsgrades derart ausgebildet ist, dass der Führungskörper (10) um die Körperlängsachse (22) verdrehbar ist.

5. Zerspanungswerkzeug (2) nach einem der vorhergehenden Ansprüche,
**dadurch gekennzeichnet,**
**dass** der Verstellmechanismus (26,28) zur Realisierung eines Freiheitsgrades derart ausgebildet ist, dass die Körperlängsachse (22) relativ zur Werkzeuglängsachse (4) verkippbar ist.

6. Zerspanungswerkzeug (2) nach einem der vorhergehenden Ansprüche,
**dadurch gekennzeichnet,**
**dass** die Masse des Führungskörpers (10) bei einer Nutzung ungleichmäßig um die Werkzeuglängsachse (4) herum verteilt ist zur konstruktiven Vorgabe einer gerichteten Unwucht bei einer Rotation um die Werkzeuglängsachse (4), wobei insbesondere die Verteilung der Masse des Führungskörpers (10) um die Werkzeuglängsachse (4) herum von der Verteilung der Masse des Schneidenkörpers (8) um die Werkzeuglängsachse (4) herum abweicht.

7. Zerspanungswerkzeug (2) nach einem der vorhergehenden Ansprüche,
**dadurch gekennzeichnet,**
**dass** bei einer Nutzung das zumindest ein Schneidelement (12) bei einer Rotation um die Werkzeuglängsachse (4) entlang eines Schneidkreises mit einem Schneidradius geführt ist und dass die beiden Führungselemente (20) bei einer Rotation um die Werkzeuglängsachse (4) entlang eines Führungskreises mit einem Führungsradius geführt sind, wobei der Führungsradius größer als oder gleich dem Schneidradius ist.

8. Zerspanungswerkzeug (2) nach einem der vorhergehenden Ansprüche,
**dadurch gekennzeichnet,**
**dass** der Schneidenkörper (8) umfangsseitig mehrere Schneidelemente (12) aufweist, die in Richtung der Werkzeuglängsachse (4) gesehen in einer Linie (18) angeordnet sind.

9. Zerspanungswerkzeug (2) nach einem der vorhergehenden Ansprüche,
**dadurch gekennzeichnet,**
**dass** sich in Richtung der Werkzeuglängsachse (4) gesehen dem Führungskörper (10) gegenüberliegend ein Schaft (6) an den Schneidenkörper (8) anschließt.

10. Bearbeitungsvorrichtung zur Bearbeitung von Werkstücken aufweisend eine Werkzeugmaschine mit einer Spindel ohne Ausrichtmechanismus,
**gekennzeichnet durch**
ein Zerspanungswerkzeug (2) nach einem der vorherigen Ansprüche, wobei das Zerspanungswerkzeug (2) unmittelbar mit der Spindel verbunden ist.

11. Verfahren zur Bearbeitung von Werkstücken mittels einer Bearbeitungsvorrichtung aufweisend eine Werkzeugmaschine mit einer Spindel und aufweisend ein Zerspanungswerkzeug (2) nach einem der Ansprüche 1 bis 9, wobei mit Hilfe des Führungskörpers (10) während einer Nutzung eine Vorspannkraft erzeugt wird.

## Claims

1. Cutting tool (2) for machining a bore in a workpiece, in particular for simultaneously machining a plurality of bores spaced apart from one another by a pre-determined distance, comprising a cutting body (8) extending in the direction of a tool longitudinal axis (4) having at least one cutting element (12) arranged circumferentially and a guide body (10) attached to the cutting body (8), which is free of cutting elements (12), wherein the guide body (10) comprises a body longitudinal axis (22), which is arranged offset from the tool longitudinal axis (4) during use, wherein the guide body (10) can radially move by means of an adjustment mechanism (26, 28) relative to the tool longitudinal axis (4), wherein the guide body (10) adjoins the cutting body (8) in the direction of the tool longitudinal axis (4),
**characterized in that**
the guide body comprises two guide elements (20) which are arranged on the circumferential side at two angular positions (34), wherein the guide body (10) is configured to exert a preload force such that, when used, the two guide elements (20) are loaded against a bearing for the guide body (10), wherein the two angular positions (34) are associated with an angular bisector (32) and the preload force (30) extends in the direction of the angular bisector (32).

2. The cutting tool (2) according to claim 1,
**characterized in that**
the body longitudinal axis (22) is aligned parallel to the tool longitudinal axis (4) and that, in order to realize a degree of freedom, the adjusting mechanism (26, 28) is configured such that the body longitudinal axis (22) can move in radial direction (30) relative to the tool longitudinal axis (4).

3. The cutting tool (2) according to claim 1 or 2,
**characterized in that**,
the adjusting mechanism (26, 28) comprises a guide rail (26) or guide groove (28), which extends in radial direction, along which the guide body (10) can move.

4. The cutting tool (2) according to any one of the preceding claims,
**characterized in that**,
in order to realize a degree of freedom, the adjusting mechanism (26, 28) is configured such that the guide body (10) can be rotated about the body longitudinal axis (22).

5. The cutting tool (2) according to any one of the preceding claims,
**characterized in that**,
in order to realize a degree of freedom, the adjusting mechanism (26, 28) is configured such that the body longitudinal axis (22) can be tilted relative to the tool longitudinal axis (4).

6. The cutting tool (2) according to any one of the preceding claims,
**characterized in that**,
during use, the mass of the guide body (10) is distributed unevenly around the tool longitudinal axis (4) in order to constructively specify a directed imbalance during rotation around the tool longitudinal axis (4), whereby in particular the distribution of the mass of the guide body (10) around the tool longitudinal axis (4) deviates from the distribution of the mass of the cutting body (8) around the tool longitudinal axis (4).

7. The cutting tool (2) according to any one of the preceding claims,
**characterized in that**,
during use, during rotation around the tool longitudinal axis (4), the at least one cutting element (12) is guided along a cutting circle having a cutting radius, and that, during rotation around the tool longitudinal axis (4), the two guide elements (20) are guided along a guide circle having a guide radius, wherein the guide radius is greater than or equal to the cutting radius.

8. The cutting tool (2) according to any one of the preceding claims,
**characterized in that**,
the cutting body (8) circumferentially comprises a plurality of cutting elements (12) which, viewed in the direction of the tool longitudinal axis (4), are arranged in a line (18).

9. The cutting tool (2) according to any one of the preceding claims,
**characterized in that**,
viewed in the direction of the tool longitudinal axis (4), a shaft (6) adjoins the cutting body (8) opposite to the guide body (10).

10. Machining device for machining workpieces comprising a machine tool having a spindle without an alignment mechanism,
**characterized by**
a cutting tool (2) according to any one of the preceding claims, wherein the cutting tool (2) is directly connected to the spindle.

11. Method for machining workpieces by means of a machining device comprising a machining tool having a spindle and comprising a cutting tool (2) according to any one of the claims 1 to 9, wherein a preload force is generated with the aid of the guide body (10) during use.

## Revendications

1. Outil à enlèvement de copeaux (2) permettant d'usiner un alésage d'une pièce à usiner, permettant notamment d'usiner simultanément plusieurs alésages espacés d'un écart prédéterminé, et présentant un corps de coupe (8) qui s'étend dans la direction d'un axe longitudinal d'outil (4) et est doté d'au moins un élément de coupe (12) agencé sur sa périphérie, et un corps de guidage (10) qui est fixé au corps de coupe (8) et est exempt d'éléments de coupe (12), ledit corps de guidage (10) présentant un axe longitudinal de corps (22) qui est agencé, dans un cas d'utilisation, en décalage par rapport à l'axe longitudinal d'outil (4), ledit corps de guidage (10) pouvant être déplacé radialement par rapport audit axe longitudinal d'outil (4) au moyen d'un mécanisme de réglage (26, 28), étant entendu que le corps de guidage (10) est dans le prolongement du corps de coupe (8), dans la direction de l'axe longitudinal d'outil (4),
**caractérisé en ce que**
le corps de guidage présente deux éléments de guidage (20) agencés sur la périphérie de ce dernier en deux positions angulaires (34), ledit corps de guidage (10) étant conçu pour exercer une force de précontrainte de telle manière que, dans un cas d'utilisation, les deux éléments de guidage (20) sont précontraints contre un appui destiné au corps de guidage (10), une bissectrice (32) étant associée auxdites deux positions angulaires (34) et la force de précontrainte (30) allant dans le sens de la bissectrice (32).

2. Outil à enlèvement de copeaux (2) selon la revendication 1,
**caractérisé en ce que**
l'axe longitudinal de corps (22) est orienté parallèlement à l'axe longitudinal d'outil (4) et **en ce que** le mécanisme de réglage (26, 28), pour réaliser un degré de liberté, est conçu de telle manière que l'axe longitudinal de corps (22) est déplaçable dans la direction radiale (30) par rapport à l'axe longitudinal d'outil (4).

3. Outil à enlèvement de copeaux (2) selon la revendication 1 ou 2,
**caractérisé en ce que**
le mécanisme de réglage (26, 28) présente une coulisse (26) ou une rainure de guidage (28) qui s'étend dans la direction radiale et le long de laquelle le corps de guidage (10) est déplaçable.

4. Outil à enlèvement de copeaux (2) selon l'une des revendications précédentes,
**caractérisé en ce que**
le mécanisme de réglage (26, 28), pour réaliser un degré de liberté, est conçu de telle manière que le corps de guidage (10) peut tourner sur l'axe longitudinal de corps (22).

5. Outil à enlèvement de copeaux (2) selon l'une des revendications précédentes,
**caractérisé en ce que**
le mécanisme de réglage (26, 28), pour réaliser un degré de liberté, est conçu de telle manière que l'axe longitudinal de corps (22) peut basculer par rapport à l'axe longitudinal d'outil (4).

6. Outil à enlèvement de copeaux (2) selon l'une des revendications précédentes,
**caractérisé en ce que**
la masse du corps de guidage (10), dans un cas d'utilisation, est répartie de manière irrégulière autour de l'axe longitudinal d'outil (4) en prérequis technique à un déséquilibre dirigé lors d'une rotation sur l'axe longitudinal d'outil (4), la répartition de la masse du corps de guidage (10) autour de l'axe longitudinal d'outil (4) étant notamment différente de la répartition de la masse du corps de coupe (8) autour de l'axe longitudinal d'outil (4).

7. Outil à enlèvement de copeaux (2) selon l'une des revendications précédentes,
**caractérisé en ce que**
dans un cas d'utilisation, l'au moins un élément de coupe (12) est guidé le long d'un cercle de coupe présentant un rayon de coupe, lors d'une rotation sur l'axe longitudinal d'outil (4), et **en ce que** les deux éléments de guidage (20) sont guidés le long d'un cercle de guidage présentant un rayon de guidage, lors d'une rotation sur l'axe longitudinal d'outil (4), ledit rayon de guidage étant supérieur ou égal au rayon de coupe.

8. Outil à enlèvement de copeaux (2) selon l'une des revendications précédentes,
**caractérisé en ce que**
le corps de coupe (8) présente plusieurs éléments de coupe (12) sur sa périphérie, lesquels sont agencés le long d'une ligne (18), vu selon la direction de l'axe longitudinal d'outil (4).

9. Outil à enlèvement de copeaux (2) selon l'une des revendications précédentes,
**caractérisé en ce que**
un arbre (6) est dans le prolongement du corps de coupe (8), vu selon la direction de l'axe longitudinal d'outil (4), à l'opposé du corps de guidage (10).

10. Dispositif d'usinage de pièces présentant une machine-outil dotée d'une broche sans mécanisme de détrompage,
**caractérisé par**
un outil à enlèvement de copeaux (2) selon l'une des revendications précédentes, ledit outil à enlèvement de copeaux (2) étant raccordé directement à ladite broche.

11. Procédé d'usinage de pièces au moyen d'un dispositif d'usinage présentant une machine-outil dotée d'une broche et présentant un outil à enlèvement de copeaux (2) selon l'une des revendications 1 à 9, le corps de guidage (10) permettant, à l'usage, de produire une force de précontrainte.
